# EUROPEAN PATENT SPECIFICATION

(11) **EP 4 098 790 B1**
(45) Date of publication and mention of the grant of the patent: **21.01.2026**
(21) Application number: 20935675.7
(22) Date of filing: 03.07.2020
(51) Int. Cl.: D06F 37/30, H02K 1/18, H02K 7/14

(54) **STATOR, MOTOR, AND LAUNDRY TREATMENT DEVICE**
STATOR, MOTOR UND WÄSCHEBEHANDLUNGSVORRICHTUNG
STATOR, MOTEUR ET DISPOSITIF DE TRAITEMENT DU LINGE

(30) Priority: 09.05.2020 CN 202010387881
(43) Date of publication of application: 07.12.2022
(73) Proprietor: Wuxi Little Swan Electric Co., Ltd., Wuxi, Jiangsu 214028 (CN)
(72) Inventor: ZHANG, Wei, Wuxi, Jiangsu 214028 (CN); MIAO, Yulai, Wuxi, Jiangsu 214028 (CN)
(74) Representative: Whitlock, Holly Elizabeth Ann
(86) International application number: PCT/CN2020/100172
(87) International publication number: WO 2021/227222

(56) References cited:
- CN-A- 105 490 463
- CN-U- 208 738 933
- CN-U- 210 287 841
- JP-A- 2006 141 989
- JP-B2- 4 119 661
- US-A1- 2013 200 747
- US-A1- 2013 255 330
- US-B2- 8 756 957

## Description

### TECHNICAL FIELD

The present disclosure relates to the field of laundry treatment technologies, and more particularly, to a stator, a motor, and a laundry treatment device.

### BACKGROUND

In the related art, a direct drive motor is usually mounted on a bearing seat. The stability of the motor is ensured by fastening the motor to the bearing seat. However, such an engagement manner demands for a bearing seat of a large size and requires punching holes in a high-hardness bearing seat for the fixation of the motor, resulting in high overall fabrication costs. To solve this problem, it is necessary to design a new stator structure that is adapted for engagement with a plastic base and to ensure stability of the overall structure during assembly. US8756957B2 relates generally to a tub made by insert molding and a washing machine comprising the same. CN210287841U relates generally to a clothes processing device to reduce production costs.

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The present disclosure aims to solve at least one of the technical problems in the related art. To this end, embodiments of the present disclosure is to provide a stator that is simple in structure and easy to be assembled.

The present disclosure further provides a motor.

The present disclosure further provides a laundry treatment device.

According to an embodiment in a first aspect of the present disclosure, a stator is adapted to be mounted on a base body. The stator includes a mounting portion having a plurality of connection posts provided thereon. Each of the plurality of connection posts has a connection hole defined therein. The stator is fixed on a mounting seat of the base body by a connector passing through the connection hole, and the mounting seat is made of a plastic material. Each of the plurality of connection posts includes a support structure provided thereon. The base body has a support member provided thereon. The support structure at least partially overlaps with the support member in a fixing direction of the connector.

With the stator according to embodiments of the present disclosure, by providing the connection post on the support structure, it is possible to increase a structural strength of the connection post, and can also prevent damages to the connection post by sharing an impact force received on the connection post when the connection hole is connected to the base body by the connector. By allowing the support structure to at least partially overlap with the support member, an impact force to which the support structure is subjected during mounting of the connector can be transferred to the support member. The support member thus shares the impact force to prevent a hole on the mounting seat from being damaged, thereby improving stability of an overall structure during mounting of the stator.

With the stator according to an embodiment of the present disclosure, the support structure is formed on a side, facing towards an interior of the stator, of a corresponding one of the plurality of connection posts. The support member is at least partially located below the support structure. The support structure at least partially overlaps with the support member in an upward-downward direction.

With the stator according to an embodiment of the present disclosure, the support structure has an upper end surface flush with an upper end surface of the corresponding one connection post, and is directly or indirectly abutted against and engaged with the mounting seat of the base body.

With the stator according to an embodiment of the present disclosure, the support structure has at least one opening extending in a height direction thereof.

With the stator according to an embodiment of the present disclosure, the support structure has an annular support column formed thereon and extending in an axial direction of the connection post.

In some examples, each of the plurality of connection posts includes at least two annular support columns provided thereon. The at least two annular support columns are arranged in a circumferential direction of the connection post and connected to each other.

According to an embodiment of the present disclosure, the stator also includes a plurality of connection ribs as circular arc ribs located on a same circumference. Two adjacent connection posts of the plurality of connection posts are connected to each other by a corresponding one of the plurality of connection ribs.

According to an embodiment of the present disclosure, the stator also includes an annular rib located at an outside of the plurality of connection posts and connected to the plurality of connection posts.

With the stator according to an embodiment of the present disclosure, a side, facing away from an interior of the stator, of each of the plurality of connection posts is connected to the annular rib by at least one first reinforcing rib.

With the stator according to an embodiment of the present disclosure, the mounting portion has a central hole defined in a middle part thereof. The support member has a part protruding from the base body. The central hole has an edge at least partially in position-fit with the part of the support member protruding from the base body.

With the stator according to an embodiment of the present disclosure, the mounting portion has an annular positioning flange provided thereon. The central hole is defined by the annular positioning flange.

According to an embodiment of the present disclosure, the stator also includes a fixing sleeve disposed in the connection hole and tightly engaged with a wall of the connection hole.

According to an embodiment of the present disclosure, the stator also includes a first positioning member adapted to be staggered with a second positioning member of an injection mold for the stator during injection molding of the stator, and a fool-proofing portion disposed on the stator at a position corresponding to the second positioning member.

According to an embodiment in a second aspect of the present disclosure, a motor includes a rotation shaft, a rotor, and the stator according to an embodiment of the present disclosure. By employing the stator as described above, it is possible to facilitate mounting and engagement between the motor and the base body. In addition, in an assembly process, good stability and a high-strength of the overall structure are implemented.

According to an embodiment in a third aspect of the present disclosure, a laundry treatment device includes an outer tub having a bearing seat embedded in a bottom thereof, and the motor according to an embodiment in the second aspect of the present disclosure. Here, the bottom of the outer tub is formed as the base body, and the bearing seat is formed as the support member. The rotation shaft is engaged with a bearing on the bearing seat. The stator is fixedly connected to the bottom of the outer tub. With the above motor, the stator is directly fixedly connected to the outer tub, without any transition member such as a metallic ring for connection. Therefore, costs can be lowered. In addition, mounting of the rotation shaft is realized by engaging the rotation shaft with the bearing on the bearing seat. Also, the bearing seat can bear the impact force generated during the mounting of the connector to prevent a hole on the outer tub from being damaged.

Additional aspects and advantages of the present disclosure will be provided at least in part in the following description, or will become apparent at least in part from the following description, or can be learned from practicing of the present disclosure.

### BRIEF DESCRIPTION OF DRAWINGS

The above and/or additional aspects and advantages of the present disclosure will become more apparent and more understandable from the following description of embodiments taken in conjunction with the accompanying drawings, in which:
FIG. 1 is a schematic view of a front structure of a stator according to an embodiment of the present disclosure;
FIG. 2 is a schematic view of a rear structure of a stator according to an embodiment of the present disclosure;
FIG. 3 is an enlarged view of a structure A in FIG. 2;
FIG. 4 is a cross-sectional view taken along line B-B in FIG. 2;
FIG. 5 is an enlarged view of a structure C in FIG. 4;
FIG. 6 is a schematic view of a stator according to an embodiment of the present disclosure from one view;
FIG. 7 is an enlarged view of a structure D in FIG. 6;
FIG. 8 is a cross-sectional view taken along line E-E in FIG. 6;
FIG. 9 is an enlarged view of a structure F in FIG. 8;
FIG. 10 is a schematic structural view of a stator body according to an embodiment of the present disclosure;
FIG. 11 is a partial schematic structural view of a laundry treatment device according to an embodiment of the present disclosure;
FIG. 12 is a schematic view of a laundry treatment device according to an embodiment of the present disclosure from one view;
FIG. 13 is a cross-sectional view taken along line G-G in FIG. 12;
FIG. 14 is an enlarged view of structure H in FIG. 13;
FIG. 15 is a schematic view of an assembled structural of an outer tub and a bearing seat according to an embodiment of the present disclosure; and
FIG. 16 is an enlarged view of a structure I in FIG. 15.

### Reference Signs:

laundry treatment device 100, stator 300,
outer tub 10, mounting seat 11, mounting hole 12, third reinforcing rib 131, fourth reinforcing rib 132, support base 14, support platform 15, annular reinforcing rib 16,
bearing seat 20, positioning portion 21,
stator body 30, annular frame 31, stator tooth 32, first positioning member 33,
injection molded body 40, central hole 401, connection hole 402, fool-proofing portion 403, wrapping portion 41, mounting portion 42, first planar segment 421, inclined segment 422, second planar segment 423, connection post 43, support structure 44, annular support column 4401, opening 441, connection rib 45, annular rib 46, first reinforcing rib 47, second reinforcing rib 48, annular positioning flange 49,
fixing sleeve 50.

### DESCRIPTION OF EMBODIMENTS

The embodiments of the present disclosure will be described in detail below with reference to examples thereof as illustrated in the accompanying drawings, throughout which same or similar elements, or elements having same or similar functions, are denoted by same or similar reference signs. The embodiments described below with reference to the drawings are illustrative only, and are intended to explain, rather than limiting, the present disclosure.

In the description of the present disclosure, it should be understood that the orientation or position relationship indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., is based on the orientation or position relationship shown in the drawings, and is only for the convenience of describing the present disclosure and simplifying the description, rather than indicating or implying that the associated device or element must have a specific orientation, or be constructed and operated in a specific orientation, and therefore cannot be understood as a limitation of the present disclosure. In addition, the features associated with "first" and "second" may explicitly or implicitly include at least one of the features. In the description of the present disclosure, "a plurality of" means at least two, unless otherwise defined.

In the present disclosure, it should be noted that, unless otherwise clearly specified and limited, terms such as "installed", "mounted", "connected", "coupled" and the like should be understood in a broad sense. For example, it may be a fixed connection or a detachable connection or connection as one piece; mechanical connection or electrical connection; direct connection or indirect connection through an intermediate; internal communication of two components, unless otherwise clearly limited. For those of ordinary skill in the art, the specific meaning of the above-mentioned terms in the present disclosure can be understood according to specific circumstances.

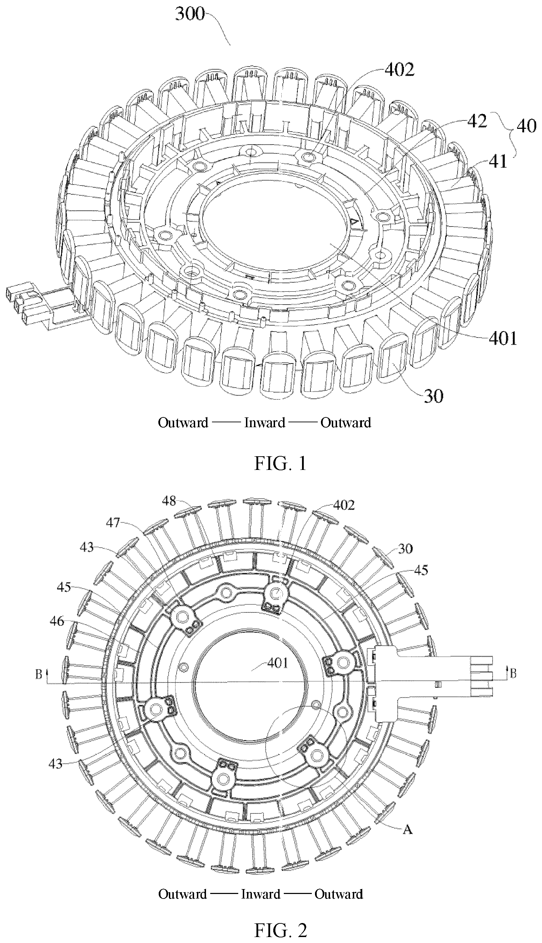

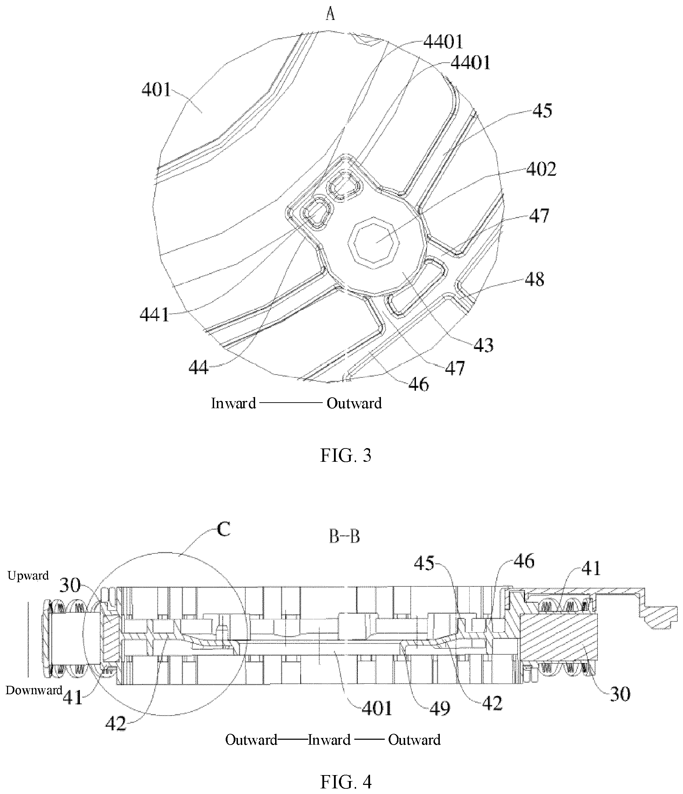

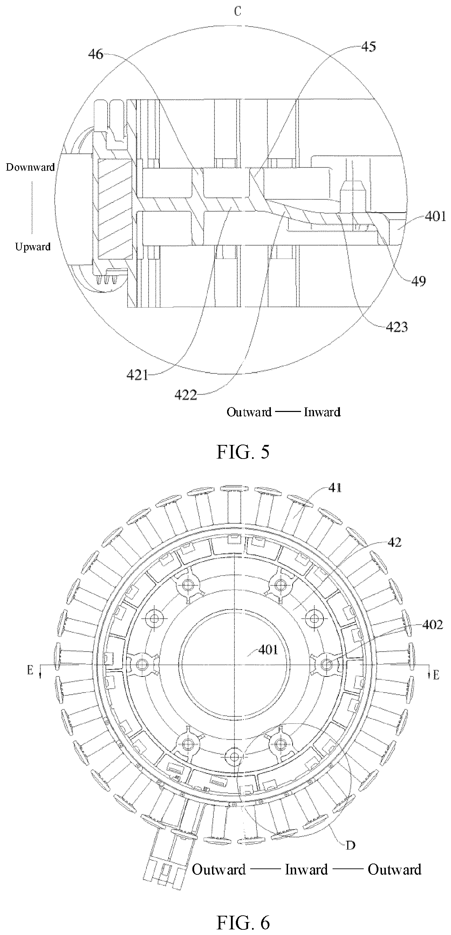

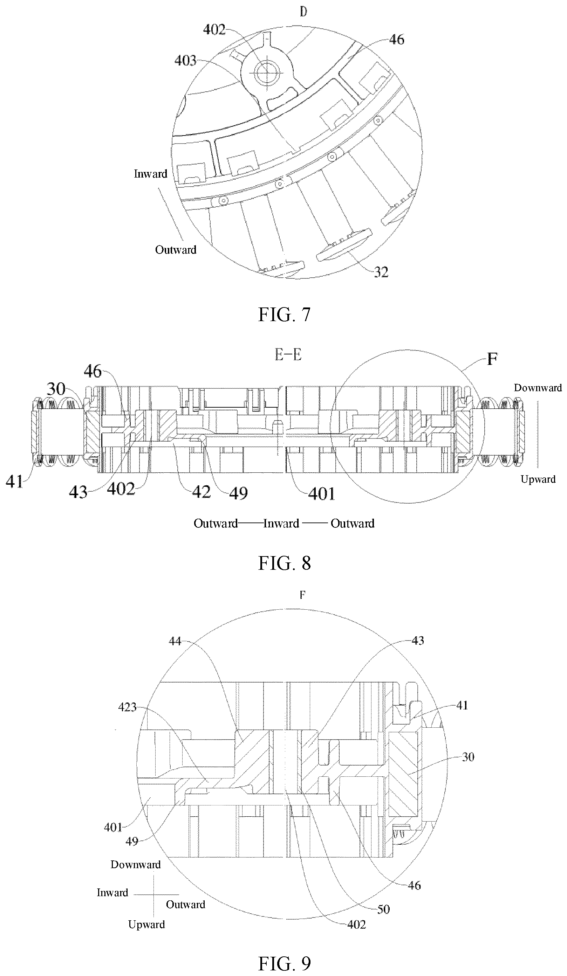

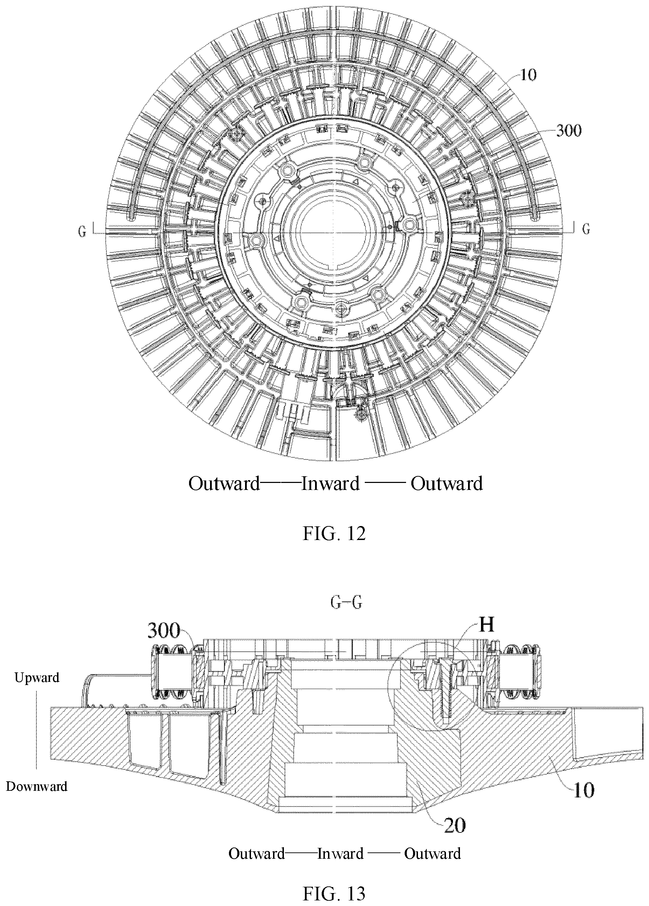

A stator 300 according to an embodiment of the present disclosure will be described below with reference to FIG. 1 to FIG. 16.

The following description is made by taking mounting the stator 30 on a drum washing machine as an example. That is, a bottom of an outer tub 10 of the drum washing machine is used as a base, and a bearing seat inserted into the bottom of the outer tub 10 is used as a support member. It should be noted that the stator 30 of the present disclosure may also be mounted on other devices such as a dryer, a pulsator washing machine, or other devices that need to be driven by a direct drive motor.

As illustrated in FIG. 1 to FIG. 16, according to an embodiment of the present disclosure, the stator 300 is adapted to be mounted on the outer tub 10, and includes a mounting portion 42. The mounting portion 42 has a plurality of connection posts 43 provided thereon. Each of the plurality of connection posts 43 has a connection hole 402 formed therein. The stator 300 can be fixed to a mounting seat 11 at the bottom of the outer tub 10 by a connector passing through the connection hole 402.

Here, each of the plurality of connection posts 43 has a support structure 44 provided thereon and in a direction towards an interior of the stator. One possible scenario is that the support structure 44 is closer to the interior of the stator than the connection hole 402. By providing the support structure 44 on the connection post 43, a structural strength of the connection post can be enhanced. In addition, when the connection hole 402 is connected to the bottom of the outer tub 10, the support structure 44 can share an impact force exerted on the connection post to prevent damages to the mounting seat 11 of the outer tub 10 made of a plastic material.

A bearing seat 20 is inserted into the bottom of the outer tub 10. The support structure 44 and the bearing seat 20 at least partially overlap with each other in a fixing direction of the connector. The term "overlap" herein may mean that a projection of the support structure 44 in a direction perpendicular to a fixing direction of the bearing seat 20 at least partially overlaps with a projection of the bearing seat 20 in this direction. In an embodiment, for example, when the bearing seat 20 is fixed on the outer tub 10 in an upward-downward direction, the support structure 44 may be located above or below the bearing seat 20. The support structure 44 may be supported directly or indirectly on the bearing seat 20 during mounting of the connector to disperse and transfer a part of the impact force generated during the mounting of the connector to the bearing seat 20. That is, a part of the support structure 44 may be supported directly on a part of the bearing seat 20, or a layer of plastic having a small thickness may be interposed between the part of the support structure 44 and the bearing seat 20. In this case, the impact force received by the support structure 44 is still borne by the bearing seat 20 to mitigate the impact force received by the mounting seat 11 and avoid damages to the mounting seat 11.

With the stator 300 according to embodiments of the present disclosure, by arranging the support structure 44 and the bearing seat 20 to partially overlap with each other, the impact force to which the support structure 44 is subjected during the mounting of the connector may be transferred to the bearing seat 20. The bearing seat 20 can share the impact force to further avoid a deformation of the mounting seat 11 due to the impact force. That is, when the connector, e.g., a screw, is tightened, the mounting seat 11 and the bearing seat 20 share a force acting on the mounting seat 11 by the connection post 43. Such a manner can improve stability of the overall structure during mounting of the stator.

In some embodiments, the bearing seat 20 is partially located below the support structure 44 supported on the mounting seat 11 of the outer tub 10. The support structure 44 at least partially overlaps with the bearing seat 20. The mounting portion 42 has a central hole 401 formed in a middle part thereof. A part of the bearing seat 20 protrudes from the outer tub 10 to form a positioning portion 21. The positioning portion 21 is engaged with the central hole 401. In this manner, a positioning can be provided during the mounting of the stator.

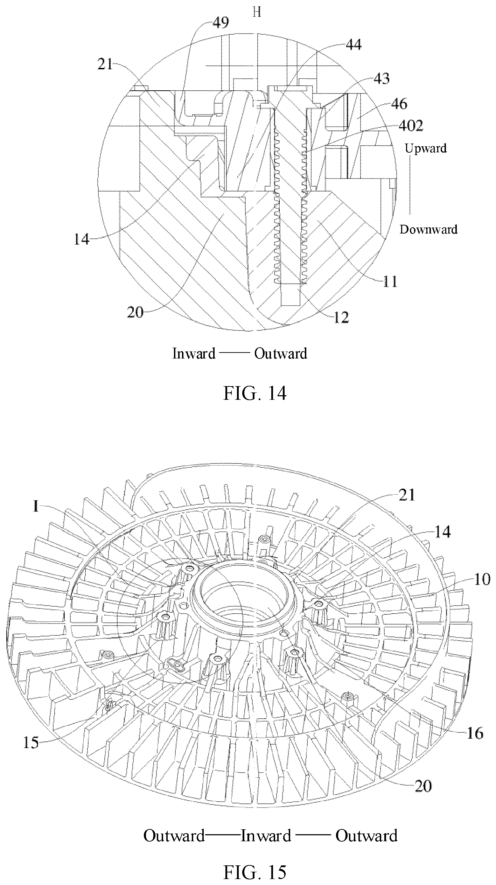

In some examples, during mounting and fixing of the stator 300, the connection post 43 is abutted against and engaged with an end surface engaged with the mounting seat 11, and an upper end surface of the supporting structure 44 is flush with an upper end surface of the connection post 43 to further ensure the mounting stability of the stator 300. When the connection hole 402 is connected to the outer tub 10 by the connector, the upper end surface of the support structure 44 and the mounting seat 11 are abutted against and engaged with each other, which can increase a contact area between the upper end surface of the support structure 44 and the mounting seat 11 to prevent an outer surface of the bottom of the outer tub 10 from being damage, so that the support structure 44 can be abutted against and engaged with the mounting seat 11, thereby ensuring the mounting stability of the stator 300. Also, the support structure 44 can disperse and transfer the impact force generated during the mounting to the support member (e.g., the bearing seat 20 illustrated in FIG. 14) to avoid damages to a mounting hole 12 on the outer tub 10.

In some examples, a plurality of support structures 44 is provided and connected to the plurality of connection posts 43 in a one-to-one correspondence. That is, each of the plurality of connection posts 43 has the support structure 44 to ensure a same structure at each connection post 43. The plurality of support structures 44 is equidistant from an edge of the central hole 401 in a radial direction of an imaginary circle to form an outer side surface of the central hole 401 into a uniform structure, which in turn avoids differences in accuracy of a circumferential positioning surface of the stator due to plastic contraction.

In some examples, the support structure 44 has at least one opening 441 extending in a height direction thereof. Further, the opening 441 may penetrate the support structure 44 in the height direction thereof. That is, the support structure 44 is formed into a hollow structure. Therefore, the support structure 44 can act as a cushion for the connector when the connector passes through the connection hole 402 and the mounting hole 12 on the outer tub 10 to avoid damages to the mounting hole 12 on the outer tub 10 and to improve the stability of the overall structure.

In some examples, the support structure 44 is formed as an annular support column 4401 extending in an axial direction of the connection post 43. An opening 441 extending in an axial direction of the annular support column 4401 is disposed in the annular support column 4401. The annular support column 4401 can act as a cushion when the connection post 43 is engaged with the outer tub 10 to avoid damages to the mounting hole 12 on the outer tub 10 and to improve the stability of the overall structure.

In some examples, the connection post 43 has at least two annular support columns 4401 provided thereon. The at least two annular support columns 4401 are arranged in a circumferential direction of the connection post 43 and connected to each other to improve the structural strength of the connection post 43. Also, a cushioning effect can be enhanced when the connection post 43 is engaged with the outer tub 10 to further avoid damages to the mounting hole 12 on the outer tub 10 and improve the stability of the overall structure.

As illustrated in FIG. 2, in some examples, the stator 300 also includes a plurality of connection ribs 45 formed into a circular arc rib located on a same circumference. Two adjacent connection posts 43 of the plurality of connection posts 45 are connected to each other by the connection rib 45. Therefore, a correlation among the plurality of connection posts 43 can be increased, and a structural strength of each of the plurality of connection posts 43 can be enhanced, thereby ensuring a structural stability of the stator 300 while further ensuring stability and reliability of an engagement between each of the plurality of connection post 43 and the outer tub 10.

As illustrated in FIG. 2, in some examples, the stator 300 also includes an annular rib 46 located on an outer side of the plurality of connection posts 43 and connected to the plurality of connection posts 43. In this manner, the structural strength of the connection posts 43 can be further enhanced. Also, a structural strength of an injection molded body 40 on an outer side of the connection post 43 can be enhanced to prevent the mounting of the stator 300 from being affected by a structural deformation when the connector passes through the connection hole 402 and the mounting hole 12, and thus the stability of the overall structure can be improved.

In some examples, a side, facing away from the stator, of each of the plurality of connection posts 43 is connected to the annular rib 46 by a first reinforcing rib 47. That is, the first reinforcing rib 47 has on end connected to the connection post 43 and another end connected to the annular rib 46. One or more first reinforcing ribs 47 may be provided. Such a manner not only enhances a structural strength between the connection post 43 and the annular rib 46, but also increases the correlation among the plurality of connection posts 43, thereby improving the stability and reliability of the engagement between each of the plurality of connection posts 43 and the outer tub 10.

According to an embodiment of the present disclosure, the stator 300 is formed by an injection molding process. The stator 300 includes a stator body 30 and an injection molded body 40 adapted to be wrapped around the stator body 30. The injection molded body 40 includes a wrapping portion 41 wrapped around the stator body 30 and a mounting portion 42 disposed on an inside of the wrapping portion 41.

The central hole 401 and the connection hole 402 are defined on the mounting portion 42. The central hole 401 is located in a middle part of the mounting portion 42. In this case, when the stator 300 is mounted to a laundry treatment device 100, the central hole 401 can be engaged with the positioning portion 21 of the bearing seat 20 to provide a quick positioning for the mounting of the stator 300, thereby improving convenience of the mounting of the stator 300.

A plurality of connection holes 402 is arranged at intervals in a circumferential direction of the imaginary circle. The central hole 401 may be configured for the positioning of the stator 300. In an embodiment, for example, during the mounting of the stator 300, an outer side of the bearing seat 20 may be engaged with the central hole 401 to position the stator 300. Each of the plurality of connection holes 402 may be configured to fix the stator 300. In an embodiment, for example, during the mounting of the stator 300, the connection hole 402 may be fixedly connected to the outer tub 10 of the laundry treatment device 100 to allow the stator 300 to be fixedly connected to the outer tub 10. Of course, when the stator 300 is mounted on another device, the central hole 401 is in position-fit with the bearing seat 20, and the connection hole 402 is fixedly connected to an outer surface of the other device. That is, a fixed connection of the stator 300 is achieved by the connection hole 402.

Here, a center of the imaginary circle is coincident with a center of the central hole 401. That is, a circle where the connection hole 402 is located is concentric with a circle defined by the central hole 40. The central hole 401 can be precisely engaged with the bearing seat 20 during the fixed mounting of the stator 300. That is, a coaxiality between the stator 300 and the bearing seat 20 can be ensured, which in turn enables a rotation shaft on the stator 300 to be precisely engaged with a bearing, thereby ensuring the reliability and stability of the overall structure.

In the radial direction of the imaginary circle, a distance between the edge of the central hole 401 and the imaginary circle is constant. That is, in the radial direction of the imaginary circle, each of the plurality of connection holes 402 has a same distance from the hole edge of the central hole 401. An outer side surface of the central hole 401 is formed into a platform having a uniform thickness. During the injection molding of the stator 300, the central hole 401 may contract uniformly when the injection molded body 40 expands and contracts, which ensures a roundness of the central hole 401. Therefore, the central hole 401 can be precisely engaged with the bearing seat 20 to ensure an accuracy of a positioning surface of the stator 300.

With the stator 300 according to the embodiments of the present disclosure, by wrapping the stator body 30 with the injection molded body 40, the stator 300 has a simple structure. In addition, the mounting steps are reduced, and the stability of the overall structure can be ensured. The central hole 401 is capable of positioning the stator 300, and the connection hole 402 is capable of fixing the stator 300. Therefore, the mounting and fixing of the stator 300 can be realized. Since the distance between the imaginary circle where the plurality of connection holes 402 is located and the edge of the central hole 401 is constant, an outer side of the central hole 401 is formed into a flat surface having a uniform wall thickness, which in turn enables the injection molded body 40 to contract uniformly during the injection molding to ensure the roundness of the central hole 401. Therefore, the accuracy of the positioning surface of the stator 300 can be ensured to facilitate the mounting and fixing of the stator.

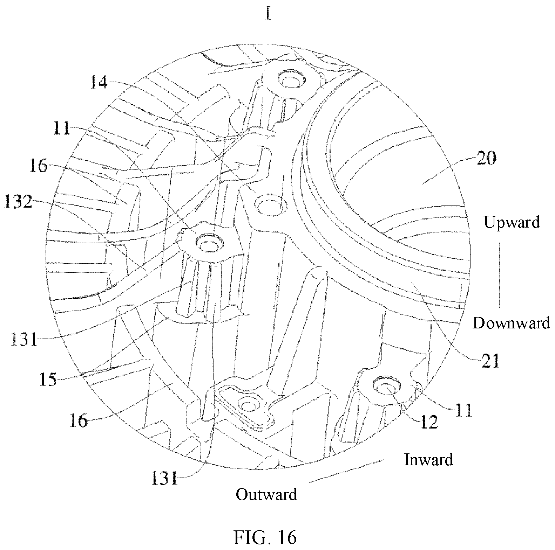

In some examples, the mounting portion 42 includes a first planar segment 421, an inclined segment 422, and a second planar segment 423 that are connected to each other sequentially from an outside to an inside in the radial direction of the central hole 401. Here, the second planar segment 423 has the central hole 401 defined in a middle part thereof. The connection hole 402 is located at a connection between the first planar segment 421 and the inclined segment 422. The inclined segment 422 gradually extends upwards from the outside to the inside. The mounting portion 42 presents a predetermined height difference. A hole wall of the central hole 401 may be abutted against and engaged with an outer side wall of an annular protruding ring (e.g., the positioning portion 21 illustrated in FIG. 16) protruding from a surface of the bottom of the outer tub by a predetermined height, and the connection hole 402 may be abutted against and engaged with an end surface of a mounting protruding post (e.g., the mounting seat 11 illustrated in FIG. 16) at the bottom of the outer tub, thereby realizing the mounting of the stator 300. Such a structure can enhance a fixing effect of the stator 300 and improve the connection stability of the stator 300.

According to an embodiment of the present disclosure, the mounting portion 42 has an annular positioning flange 49 provided thereon, and the central hole 401 is defined by the annular positioning flange 49. An inner wall surface of the annular positioning flange 49 may be abutted against and engaged with an outer wall surface of the bearing seat 20 during the mounting of the stator 300. By providing the annular positioning flange 49, it is possible to enlarge an engagement contact area between the central hole 401 and the bearing seat 20 to further improve positioning performance.

According to an embodiment of the present disclosure, the stator 300 also includes a fixing sleeve 50 arranged in the connection hole 402 and tightly engaged with a wall of the connection hole 402. In an embodiment, the fixing sleeve 50 may be a steel sleeve inserted into and tightly engaged with the connection post 43. Since the steel sleeve has a high structural strength, the structural strength of the connection post 43 can be improved to avoid a deformation of the connection post 43 during an arrangement of the connector.

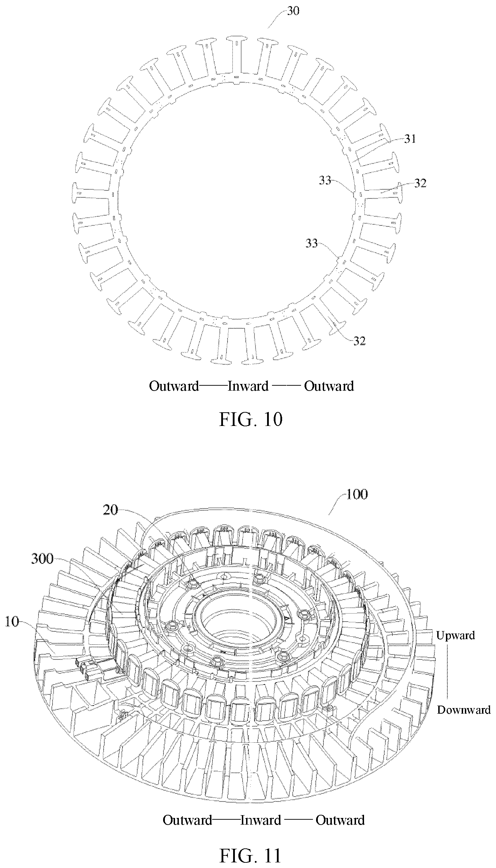

As illustrated in FIG. 10, according to an embodiment of the present disclosure, the stator body 30 includes an annular frame 31 and a plurality of stator teeth 32 arranged at intervals in a circumferential direction of the annular frame 31. Here, the stator body 30 is a silicon steel sheet, and the wrapping portion 41 is wrapped around the annular frame 31 and the stator teeth 32. Of course, a part of the plurality of stator teeth 32 may be exposed by means of a predetermined design during the injection molding. In an embodiment, for example, the wrapping portion 41 is not wrapped around an entire outer end of the stator teeth 32.

In some examples, the annular frame 31 of the stator 300 has a first positioning member 33 provided thereon. An injection mold for the stator 300 has a second positioning member provided thereon. During the injection molding of the stator 300, the first positioning member 33 is staggered with the second positioning member to ensure that the stator body 30 can be placed in a correct position in the injection mold to prevent the stator body 30 from being misplaced and damaging the injection mold.

In an embodiment, when the stator body 30 is placed within the injection mold, an information that the stator body 30 is not mounted in place can be obtained by a user when a position of the first positioning member 33 corresponds to a position of the second positioning member and an information that the stator body 30 is mounted in place when the position of the first positioning member 33 does not correspond to the position of the second positioning member. Such a manner can prevent the injection mold from being damaged by the stator body 30 during the injection molding of the stator.

Since the injection mold for the stator 300 has the second positioning member, a fool-proofing portion 403 is formed on the injection molded body 40 of the stator 300 at a position corresponding to the second positioning member after the stator is injection molded.

In some examples, the first positioning member 33 is formed as a positioning protruding rib protrudes from the annular frame 31 and extending in an axial direction of the stator. Further, a plurality of positioning protruding ribs may be provided and arranged at intervals in the circumferential direction of the annular frame 31. The plurality of stator teeth 32 is arranged on an outer side of the annular frame 31, and the plurality of positioning protruding ribs is arranged on an inner side of the annular frame 31. Each of the plurality of positioning protruding ribs is arranged opposite to a corresponding one of the plurality of stator teeth 32. However, there is no positioning protruding rib arranged at positions opposite to at least a part of the plurality of stator teeth 32. Therefore, the positioning protruding rib may be staggered with the second positioning member when the stator body 30 is placed within the injection mold. Here, the second positioning member is formed as a bump, and the fool-proofing portion 403 is formed as a fool-proofing recess in a same shape as the bump.

By forming the first positioning member 33 as the positioning protruding rib located on the inner side of the annular frame 31, each of the plurality of stator teeth 32 can be located at a corresponding position in the injection mold when the stator body 30 is placed within the injection mold. When the positioning protruding rib is abutted against the bump, the stator body 30 cannot be placed within the injection mold completely. Therefore, the user can obtain the information that the stator body 30 is not mounted in place. In this case, the positioning protruding rib may be staggered with the bump through rotating the stator body 30 by an angle of one stator tooth 32. Therefore, the stator body 30 may be completely placed within the injection mold, and the user can obtain the information that the stator body 30 is mounted in place. The stator body 30 would not damage the injection mold during the injection molding, and the injection molded body 40 can be injection molded.

According to an embodiment of the present disclosure, a motor includes a rotation shaft, a rotor, and the stator 300. The rotor is located on an outer side of the stator 300 to form an outer rotor structure. The rotation shaft is connected to the rotor. By employing the above stator 300, the stability of the overall structure can be enhanced, and it is easier for the motor to be engaged with and mounted to the outer tub 10 on the laundry treatment device 100. In addition, the overall structure has high structural strength and good stability during assembly.

According to an embodiment of the present disclosure, a laundry treatment device 100 includes the outer tub 10 and the motor. The bearing seat 20 is embedded in the bottom of the outer tub 10. The motor is mounted on an outer side of the bottom of the outer tub 10. The rotation shaft of the motor is engaged with a bearing on the bearing seat 20, and the stator 300 is fixedly connected to the bottom of the outer tub 10. With the above motor, the stator 300 can be fixedly connected to the outer tub 10 directly, which reduces a size of a structure of the bearing seat 20, and eliminates a need of punching holes in the bearing seat 20. Also, there is no necessary for transition member such as the metallic ring for the connection. In addition, the stator 300 is connected to a plastic member in an engagement manner to reduce fabrication costs. An engagement between the rotation shaft and the bearing on the bearing seat 20 can realize a mounting of the rotation shaft while ensuring a stability of the rotation shaft, which makes it possible for the motor to drive a washing tub inside the outer tub. In addition, the bearing seat 20 can bear a part of the impact force generated during the mounting of the connector to prevent the mounting hole 12 on the outer tub 10 from being damaged.

An embodiment of the laundry treatment device 100 according to the present disclosure will be described below in combination with FIG. 1 to FIG. 16.

The laundry treatment device 100 includes an outer tub and a motor. The outer tub 10 has a support base 14 provided on a bottom thereof. A bearing seat 20 is embedded in the support base 14, and partially protrudes from the support base 14 to form an annular protruding ring.

The outer tub 10 has a plurality of support platforms 15 provided on a bottom thereof. A mounting seat 11 is disposed on each of a plurality of support platforms 15. The mounting seat 11 is formed as a mounting protruding post protruding from the support platform 15. The mounting protruding post has a mounting hole 12 defined thereon. Here, the mounting protruding post extends in an axial direction of the outer tub 10. A plurality of mounting protruding posts is arranged at intervals in a circumferential direction of the support base 14. An inner side of each of the plurality of mounting protruding posts is connected to the support base 14. For example, a direction facing away from the bottom of the outer tub 10 is defined as an upward direction, an upper surface of each mounting protruding post is lower than an upper surface of the support base 14 (as illustrated in FIG. 16, for ease of understanding, an outer side direction of the bottom of the outer tub 10 is defined as the upward direction in this embodiment). Therefore, a step is formed at a connection between the mounting protruding post and the support base 14. Each of the plurality of support platforms 15 has an annular reinforcing rib 16 formed on at outside thereof. A side wall of each mounting protruding post also has a fourth reinforcing rib 132 and a plurality of third reinforcing ribs 131. The fourth reinforcing rib 132 extends in a radial direction of the annular reinforcing rib 16 and connects the side wall of the mounting protruding post to the annular reinforcing rib 16. The plurality of third reinforcing ribs 131 is arranged at intervals in a circumferential direction of the mounting protruding post. The fourth reinforcing rib 132 is located between two adjacent third reinforcing ribs 131. Each of the plurality of third reinforcing ribs 131 is connected to the side wall of the mounting protruding post and the support platform 15. In this manner, a connection between the mounting protruding post and the bottom of the outer tub 10 can be enhanced to improve structural strength and stability of the mounting protruding post.

The motor includes a rotation shaft, a rotor, and a stator 300. The stator 300 has a plurality of connection posts 43 provided on a side thereof facing towards the bottom of the outer tub 10. A connection hole 402 is defined on each of the plurality of connection posts 43. The rotor is located on the outer side of the stator 300 to form an outer rotor structure. The rotation shaft is connected to the rotor and adapted to be engaged with a bearing on a bearing seat 20.

The stator 300 includes a stator body 30 and an injection molded body 40. The stator 300 is molded by the injection molding process with the stator body 30 as an insert. The stator body 30 is a silicon steel sheet, and the injection molded body 40 is a plastic member.

The stator body 30 includes an annular frame 31, and a plurality of stator teeth 32. The plurality of stator teeth 32 is located at an outside of the annular frame 31 and arranged at intervals in a circumferential direction of the annular frame 31. The annular frame 31 has a plurality of first positioning members 33 provided on the inner side thereof and formed as positioning protruding ribs each protruding from the annular frame 31. The positioning protruding ribs each extend in the axial direction of the stator. Each positioning protruding rib is arranged opposite to a corresponding one of the plurality of stator teeth 32.

The injection molded body 40 includes a wrapping portion 41 wrapped around the stator body 30 and a mounting portion 42 disposed at an inside of the wrapping portion 41. During the injection molding of the stator 300, since an injection mold for the stator 300 has a bump staggered with the first positioning member 33, a fool-proofing recess corresponding to the bump is formed on the injection molded body 40 after the stator is injection molded.

The mounting portion 42 includes a first planar segment 421, an inclined segment 422, and a second planar segment 423. The second planar segment 423 has an annular positioning flange 49 provided in a middle part thereof. A central hole 401 is defined by the annular positioning flange 49, and is adapted to be engaged with the bearing seat 20 to providing a positioning for the mounting of the stator.

A connection hole 402 is defined at a connection between the first planar segment 421 and the inclined segment 422. A plurality of connection holes 402 is provided and arranged at intervals in a circumferential direction of an imaginary circle. A center of the imaginary circle is coincident with a center of the central hole 401. In a radial direction of the imaginary circle, a distance between an edge of the central hole 401 and the imaginary circle is constant. Therefore, an outer side surface of the central hole 401 is formed into a platform having a uniform thickness. During the injection molding of the stator 300, the central hole 401 can contract uniformly when the injection molded body 40 expands and contracts, which can ensure a roundness of the central hole 401. Therefore, the central hole 401 can be precisely engaged with the bearing seat 20 to ensure an accuracy of a positioning surface of the stator 300.

The mounting portion 42 has a plurality of connection posts 43 protruding from an upper surface thereof. Upper surfaces of the plurality of connection posts 43 are located in a same plane. Each of the plurality of connection posts 43 has a connection hole 402 defined in a center thereof. The connection hole 402 penetrates the connection post 43. A fixing sleeve 50 is disposed in the connection hole 402. In an embodiment, the fixing sleeve 50 is a steel sleeve inserted into and tightly engaged with the connection post 43 to improve the structural strength of the connection post 43.

Two adjacent connection posts 43 of the plurality of connection posts 43 are connected to each other by the connection rib 45. A plurality of connection ribs 45 is provided and formed as circular arc ribs located in a same circumference. An annular rib 46 is disposed on an outer side of the plurality of connection posts 43. Each of the plurality of connection posts 43 is connected to the annular rib 46 by two first reinforcing ribs 47. An outer side of the annular rib 46 is connected to the wrapping portion 41 by a second reinforcing rib 48. Therefore, a connection between the mounting portion 42 and the wrapping portion 41 can be reinforced, and structural strength and stability of the mounting portion 42 can be improved, thereby avoiding a deformation of the mounting portion 42.

Each of the plurality of connection posts 43 has a support structure 44 provided on a side thereof facing towards the central hole 401. The support structure 44 is formed as an annular support column 4401. Each connection post 43 has two annular support columns 4401 provided thereon. An end surface of each of the two annular support columns 4401 is flush with an end surface of the connection post 43. The two annular support columns 4401 are connected to each other and are arranged in the circumferential direction of the connection post 43. The annular support column 4401 has an opening 441 defined therein and extending in an axial direction of the annular support column 4401. The structural strength of the connection post 43 can be enhanced by the annular support column 4401. In addition, during the mounting of the stator 300, the bearing seat 20 is partially located below the support structure 44 in an upward-downward direction. The support structure 44 and the bearing seat 20 partially overlaps with each other in the upward-downward direction.

During the mounting of the stator 300, first, the stator 300 is sleeved over the annular protruding ring. The wall of the central hole 401 (an inner wall surface of the annular positioning flange 49) is abutted against and engaged with an outer wall surface of the annular protruding ring to position the stator 300. A position of the connection post 43 corresponds to a position of the mounting protruding post. Each connection post 43 is abutted against and engaged with an upper end surface of the mounting protruding post at a position corresponding to the connection post 43. A position of the connection hole 402 corresponds to a position of the mounting hole 12. The connection post 43 is fixedly connected to the mounting protruding post by a self-tapping bolt. The annular support column 4401 can act as a cushion when the connection post 43 is engaged with the mounting protruding post. Meanwhile, the impact force is partially transferred to the bearing seat 20 by the annular support column 4401. In this manner, the bearing seat 20 made of a metal can partially bear the impact force, which prevents the mounting protruding post from being damaged and improves the stability of the overall structure.

Therefore, a contact surface between the connection post 43 and the mounting protruding post is not flush with a plane where the central hole 401 is located. That is, a connection surface of the stator is located at a different height from the positioning surface of the stator. Such a manner is convenient for the stator 300 to be engaged with the outer tub 10 and the bearing seat 20, and can also ensure the positioning to be achieved at different positions of the stator 300, thereby increasing the fixing stability of the stator 300.

Other configurations as well as operations of the laundry treatment device 100 according to the embodiments of the present disclosure are known to those of ordinary skill in the art, and thus details thereof will be omitted herein.

In the present disclosure, unless expressly stipulated and defined otherwise, the first feature "on", or "under" the second feature may mean that the first feature is in direct contact with the second feature, or the first and second features are in indirect contact through another feature between the first and second features. Moreover, the first feature "above" or "over" the second feature may mean that the first feature is directly above or obliquely above the second feature, or simply mean that the level of the first feature is higher than that of the second feature.

In the description of this specification, descriptions with reference to the terms "an embodiment", "some embodiments", "illustrative embodiments", "examples", "specific examples", or "some examples" etc. mean that specific features, structure, materials or characteristics described in conjunction with the embodiment or example are included in at least one embodiment or example of the present disclosure. In this specification, the schematic representations of the above terms do not necessarily refer to the same embodiment or example.

## Claims

1. A stator, adapted to be mounted on a base body, the stator comprising a mounting portion (42) having a plurality of connection posts (43), wherein:
each of the plurality of connection posts (43) has a connection hole (402) defined therein;
the stator is fixed on a mounting seat of the base body through a connector penetrating through the connection hole (402), the mounting seat being made of a plastic material;
each of the plurality of connection posts (43) comprises a support structure (44); and
the base body has a support member, the support structure (44) at least partially overlapping with the support member in a fixing direction of the connector;
**characterised in that** each of the support structures (44) comprises at least two annular support columns (4401), the at least two annular support columns (4401) being arranged in a circumferential direction of the connection post (43) and connected to each other.

2. The stator according to claim 1, wherein:
the support structure (44) is formed on a side, facing towards an interior of the stator, of a corresponding one of the plurality of connection posts (43);
the support member is at least partially located below the support structure (44); and
the support structure (44) at least partially overlaps with the support member in an upward-downward direction.

3. The stator according to claim 2, wherein the support structure (44) has an upper end surface flush with an upper end surface of the corresponding one connection post (43), and is directly or indirectly abutted against and engaged with the mounting seat of the base body.

4. The stator according to any one of claims 1 to 3, wherein the support structure (44) has at least one opening (441) extending in a height direction thereof.

5. The stator according to any one of claims 1 to 3, wherein the annular support columns (4401) extend in an axial direction of the connection post (43).

6. The stator according to any one of claims 1 to 5, further comprising a plurality of connection ribs (45) as circular arc ribs located on a same circumference, wherein two adjacent connection posts (43) of the plurality of connection posts (43) are connected to each other by a corresponding one of the plurality of connection ribs (45).

7. The stator according to any one of claims 1 to 6, further comprising an annular rib (46) located at an outside of the plurality of connection posts (43) and connected to the plurality of connection posts (43).

8. The stator according to claim 7, wherein a side, facing away from an interior of the stator, of each of the plurality of connection posts (43) is connected to the annular rib (46) by at least one first reinforcing rib (47).

9. The stator according to any one of claims 1 to 8, wherein:
the mounting portion (42) has a central hole (401) defined in a middle part thereof; and
the support member (44) has a part protruding from the base body, the central hole (401) having an edge at least partially in position-fit with the part of the support member (44) protruding from the base body.

10. The stator according to claim 9, wherein the mounting portion (42) has an annular positioning flange (49), the central hole (401) being defined by the annular positioning flange (49).

11. The stator according to any one of claims 1 to 10, further comprising a fixing sleeve (50) disposed in the connection hole (402) and tightly engaged with a wall of the connection hole (402).

12. The stator according to any one of claims 1 to 11, further comprising:
a first positioning member (33) adapted to be staggered with a second positioning member of an injection mold for the stator during injection molding of the stator; and
a fool-proofing portion (403) disposed on the stator at a position corresponding to the second positioning member.

13. A motor, comprising:
a rotation shaft;
a rotor; and
the stator according to any one of claims 1 to 12.

14. A laundry treatment device (100), comprising:
an outer tub (10) having a bearing seat (20) embedded in a bottom thereof; and
the motor according to claim 13, wherein:
the bottom of the outer tub is formed as the base body;
the bearing seat (20) is formed as the support member;
the rotation shaft is engaged with a bearing on the bearing seat (20); and
the stator (300) is fixedly connected to the bottom of the outer tub (10).

## Patentansprüche

1. Stator, der dazu angepasst ist, auf einem Grundkörper montiert zu werden, wobei der Stator einen Montageabschnitt (42) mit einer Vielzahl von Verbindungsstützen (43) umfasst, wobei:
jede der Vielzahl von Verbindungsstützen (43) ein darin definiertes Verbindungsloch (402) aufweist;
der Stator durch einen durch das Verbindungsloch (402) hindurchgehenden Steckverbinder auf einem Montagesitz des Grundkörpers befestigt ist, wobei der Montagesitz aus einem Kunststoff hergestellt ist;
jede der Vielzahl von Verbindungsstützen (43) eine Tragkonstruktion (44) umfasst; und
der Grundkörper ein Tragelement aufweist, die Tragkonstruktion (44) mit dem Tragelement in einer Befestigungsrichtung des Steckverbinders mindestens zum Teil überlappt;
**dadurch gekennzeichnet, dass** jede der Tragkonstruktionen (44) mindestens zwei ringförmige Tragsäulen (4401) umfasst, wobei die mindestens zwei ringförmigen Tragsäulen (4401) in einer Umfangsrichtung der Verbindungsstütze (43) angeordnet und miteinander verbunden sind.

2. Stator nach Anspruch 1, wobei:
die Tragkonstruktion (44) auf einer einer Innenseite des Stators zugewandten Seite einer entsprechenden der Vielzahl von Verbindungsstützen (43) ausgebildet ist;
das Tragelement sich mindestens zum Teil unter der Tragkonstruktion (44) befindet; und
die Tragkonstruktion (44) mit dem Tragelement in einer Aufwärts-Abwärts-Richtung mindestens zum Teil überlappt.

3. Stator nach Anspruch 2, wobei die Tragkonstruktion (44) eine obere Endfläche, die mit einer oberen Endfläche der einen entsprechenden Verbindungsstütze (43) in einer Ebene liegt, aufweist und direkt oder indirekt an dem Montagesitz des Grundkörpers anliegt oder mit dem Montagesitz des Grundkörpers in Eingriff steht.

4. Stator nach einem der Ansprüche 1 bis 3, wobei die Tragkonstruktion (44) mindestens eine Öffnung (441), die sich in einer Höhenrichtung davon erstreckt, aufweist.

5. Stator nach einem der Ansprüche 1 bis 3, wobei sich die ringförmigen Tragsäulen (4401) in einer Achsenrichtung der Verbindungsstütze (43) erstrecken.

6. Stator nach einem der Ansprüche 1 bis 5, der ferner eine Vielzahl von Verbindungsrippen (45) als auf einem selben Umfang befindliche Kreisbogenrippen umfasst, wobei zwei benachbarte Verbindungsstützen (43) der Vielzahl von Verbindungsstützen (43) durch eine entsprechende der Vielzahl von Verbindungsrippen (45) miteinander verbunden sind.

7. Stator nach einem der Ansprüche 1 bis 6, der ferner eine ringförmige Rippe (46), die sich an einer Außenseite der Vielzahl von Verbindungsstützen (43) befindet und mit der Vielzahl von Verbindungsstützen (43) verbunden ist, umfasst.

8. Stator nach Anspruch 7, wobei eine von einer Innenseite des Stators abgewandte Seite jeder der Vielzahl von Verbindungsstützen (43) durch mindestens eine erste Verstärkungsrippe (47) mit der ringförmigen Rippe (46) verbunden ist.

9. Stator nach einem der Ansprüche 1 bis 8, wobei:
der Montageabschnitt (42) ein in einem mittleren Teil davon definiertes mittiges Loch (401) aufweist; und
das Tragelement (44) einen von dem Grundkörper vorstehenden Teil aufweist, wobei das mittige Loch (401) einen Rand, der mindestens zum Teil lagegenau zu dem von dem Grundkörper vorstehenden Teil des Tragelements (44) passt, aufweist.

10. Stator nach Anspruch 9, wobei der Montageabschnitt (42) einen ringförmigen Positionierflansch (49) aufweist, wobei das mittige Loch (401) von dem ringförmigen Positionierflansch (49) definiert wird.

11. Stator nach einem der Ansprüche 1 bis 10, der ferner eine Befestigungshülse (50), die in dem Verbindungsloch (402) platziert und mit einer Wand des Verbindungslochs (402) in festen Eingriff gebracht ist, umfasst.

12. Stator nach einem der Ansprüche 1 bis 11, der ferner Folgendes umfasst:
ein erstes Positionierelement (33), das dazu angepasst ist, gegen ein zweites Positionierelement einer Spritzgussform für den Stator beim Spritzgießen des Stators versetzt angeordnet zu werden; und
einen Positionssicherungsabschnitt (403), der auf dem Stator an einer dem zweiten Positionierelement entsprechenden Position platziert ist.

13. Motor, der Folgendes umfasst:
eine Drehwelle;
einen Rotor; und
den Stator nach einem der Ansprüche 1 bis 12.

14. Wäschebehandlungsvorrichtung (100), die Folgendes umfasst:
einen Außenbottich (10) mit einem Lagersitz (20), der in seinem Boden eingebettet ist; und
den Motor nach Anspruch 13, wobei:
der Boden des Außenbottichs als der Grundkörper ausgebildet ist;
der Lagersitz (20) als das Tragelement ausgebildet ist;
die Drehwelle mit einem Lager auf dem Lagersitz (20) in Eingriff steht; und
der Stator (300) mit dem Boden des Außenbottichs (10) fest verbunden ist.

## Revendications

1. Stator, conçu pour être monté sur un corps de base, le stator comprenant une partie de montage (42) présentant une pluralité de montants de connexion (43), dans lequel :
chacun de la pluralité de montants de connexion (43) présente un trou de connexion (402) défini dans celui-ci ;
le stator est fixé sur un siège de montage du corps de base par le biais d'un connecteur pénétrant à travers le trou de connexion (402), le siège de montage étant en matière plastique ;
chacun de la pluralité de montants de connexion (43) comprend une structure de support (44) ; et
le corps de base présente un élément de support, la structure de support (44) chevauchant au moins partiellement l'élément de support dans un sens de fixation du connecteur ;
**caractérisé en ce que** chacune des structures de support (44) comprend au moins deux colonnes de support annulaires (4401), les au moins deux colonnes de support annulaires (4401) étant disposées dans une direction circonférentielle du montant de connexion (43) et connectées l'une à l'autre.

2. Stator selon la revendication 1, dans lequel :
la structure de support (44) est formée sur un côté, orienté vers l'intérieur du stator, d'un montant correspondant de la pluralité de montants de connexion (43) ;
l'élément de support est situé au moins partiellement en-dessous de la structure de support (44) ; et
la structure de support (44) chevauche au moins partiellement l'élément de support dans une direction ascendante-descendante.

3. Stator selon la revendication 2, dans lequel la structure de support (44) présente une surface d'extrémité supérieure affleurant une surface d'extrémité supérieure du montant de connexion (43) correspondant, et vient directement ou indirectement buter contre le siège de montage du corps de base et s'enclencher avec celui-ci.

4. Stator selon l'une quelconque des revendications 1 à 3, dans lequel la structure de support (44) présente au moins une ouverture (441) s'étendant dans une direction de hauteur de celle-ci.

5. Stator selon l'une quelconque des revendications 1 à 3, dans lequel les colonnes de support annulaires (4401) s'étendent dans une direction axiale du montant de connexion (43).

6. Stator selon l'une quelconque des revendications 1 à 5, comprenant en outre une pluralité de nervures de connexion (45) sous forme de nervures en arc de cercle situées sur une même circonférence, dans lequel deux montants de connexion (43) adjacents de la pluralité de montants de connexion (43) sont connectés l'un à l'autre par une nervure correspondante de la pluralité de nervures de connexion (45).

7. Stator selon l'une quelconque des revendications 1 à 6, comprenant en outre une nervure annulaire (46) située au niveau d'un extérieur de la pluralité de montants de connexion (43) et connectée à la pluralité de montants de connexion (43).

8. Stator selon la revendication 7, dans lequel un côté, tourné vers l'extérieur d'un intérieur du stator, de chacun de la pluralité de montants de connexion (43) est connecté à la nervure annulaire (46) par au moins une première nervure de renfort (47).

9. Stator selon l'une quelconque des revendications 1 à 8, dans lequel :
la partie de montage (42) présente un trou central (401) défini dans une partie centrale de celle-ci ; et
l'élément de support (44) présente une partie saillant à partir du corps de base, le trou central (401) présentant un bord au moins partiellement ajusté en position avec la partie de l'élément de support (44) saillant à partir du corps de base.

10. Stator selon la revendication 9, dans lequel la partie de montage (42) présente une bride de positionnement annulaire (49), le trou central (401) étant défini par la bride de positionnement annulaire (49).

11. Stator selon l'une quelconque des revendications 1 à 10, comprenant en outre un manchon de fixation (50) disposé dans le trou de connexion (402) et en contact intime avec une paroi du trou de connexion (402).

12. Stator selon l'une quelconque des revendications 1 à 11, comprenant en outre :
un premier élément de positionnement (33) conçu pour être décalé par rapport à un second élément de positionnement d'un moule d'injection pour le stator durant un moulage par injection du stator ; et
une partie indéréglable (403) disposée sur le stator à une position correspondant au second élément de positionnement.

13. Moteur, comprenant :
un arbre de rotation ;
un rotor ; et
le stator selon l'une quelconque des revendications 1 à 12.

14. Dispositif de traitement de linge (100), comprenant :
une cuve extérieure (10) présentant un siège de roulement (20) encastré dans un fond de celle-ci ; et
le moteur selon la revendication 13, dans lequel :
le fond de la cuve extérieure est formé en tant que corps de base ;
le siège de roulement (20) est formé en tant qu'élément de support ;
l'arbre de rotation est enclenché avec un roulement sur le siège de roulement (20) ; et
le stator (300) est connecté de manière fixe au fond de la cuve extérieure (10).
